# EUROPEAN PATENT SPECIFICATION

(11) **EP 2 637 189 B1**
(45) Date of publication and mention of the grant of the patent: **26.12.2018**
(21) Application number: 10859237.9
(22) Date of filing: 02.11.2010
(51) Int. Cl.: H01H 33/59, H01H 9/54, H02H 3/02, H02H 9/00

(54) **PHASE CONTROL SWITCHING DEVICE AND CLOSING PHASE CONTROL METHOD**
PHASENREGELUNGSSCHALTVORRICHTUNG UND VERFAHREN ZUR SCHLIESSPHASENREGELUNG
DISPOSITIF COMMUTATEUR DE COMMANDE DE PHASE ET PROCÉDÉ DE COMMANDE DE PHASE DE FERMETURE

(43) Date of publication of application: 11.09.2013
(73) Proprietor: Mitsubishi Electric Corporation, Tokyo 100-8310 (JP)
(72) Inventor: CORRODI, Yves, Tokyo 100-8310 (JP); TOKOYODA, Sho, Tokyo 100-8310 (JP); MORI, Tomohito, Tokyo 100-8310 (JP); KAMEI, Kenji, Tokyo 100-8310 (JP); ITO, Hiroki, Tokyo 100-8310 (JP); KINOSHITA, Sadayuki, Tokyo 100-8310 (JP)
(74) Representative: Zech, Stefan Markus
(86) International application number: PCT/JP2010/069509
(87) International publication number: WO 2012/059980

(56) References cited:
- WO-A1-2010/035778
- JP-A- 2 179 220
- JP-A- 2004 208 394
- JP-A- 2010 004 686

## Description

### Field

The present invention relates to a phase control switchgear that controls an opening/closing timing of a breaker.

### Background

Conventionally, there has been disclosed a technique such that, at the time of turning on a neutral-ungrounded or neutral-noneffectively-grounded (i.e. neutral-point-grounded-with-high-resistance) no-load three-phase transformer, a phase in which the polarity and size of a normal magnetic flux between lines of a three-phase power source matches with a residual magnetic flux between lines on a primary side of the three-phase transformer is detected, and breakers in two phases connected between the lines are switched on in the phase, and then a breaker in the remaining phase is switched on, thereby suppressing generation of energizing inrush currents (for example, Patent Literature 1).

### Citation List

### Patent Literature

Patent Literature 1: Japanese Patent Application Laid-open No. 2010-004686.

Further similar control systems are disclosed in the publications JP 2 179220 A, JP 2004 208394 A, JP 2010 004686 A and WO 2010/035778 A1.

### Summary

### Technical Problem

However, a range of a magnetic flux error between the residual magnetic flux and the normal magnetic flux in the phase may increase depending on a phase as a switch-on target, due to an inclination of a rate of decrease of dielectric strength (RDDS) between electrodes of a breaker in a closing process of the breaker and mechanical variations of the breaker. If the magnetic flux error increases, generation of energizing inrush currents cannot be suppressed. In the conventional technique described above, because two target switch-on-phases are switched on simultaneously, if a phase in which the range of the magnetic flux error is minimized is designated as one target switch-on-phase, inevitably, there is a possibility that another remaining phase in which the range of the magnetic flux error increases needs to be designated as the other target switch-on-phase, and thus generation of energizing inrush currents may not be suppressed.

The present invention has been achieved to solve the above problems, and an object of the present invention is to provide a phase control switchgear that can suppress generation of energizing inrush currents associated with a closing operation of a neutral-ungrounded or neutral-noneffectively-grounded no-load three-phase transformer. Solution to Problem

In accordance with the invention, a phase control switchgear as set forth in claim 1 and a closing phase control method as set forth in claim 5 are provided. Further embodiments are inter alia disclosed in the dependent claims. Generally, there is provided a phase control switchgear applied to a configuration in which a three-phase switchgear is connected between a power source and a neutral-ungrounded or neutral-noneffectively-grounded no-load three-phase transformer to control a closing phase of the phase control switchgear, wherein after opening of the three-phase switchgear, a phase having a largest absolute value of a load-side magnetic flux in each phase is detected and designated as a first switch-on-phase, arbitrary phases other than the first switch-on-phase are respectively designated as a second switch-on-phase and a third switch-on-phase, and a phase in which a magnetic flux error between the load-side magnetic flux and a power-source-side magnetic flux due to mechanical operating variations of the three-phase switchgear is smaller, among two magnetic-flux matching phases in which a polarity and a size of the load-side magnetic flux in each phase match with those of the power-source-side magnetic flux in each phase on the power source side in one cycle, is designated as a target switch-on-phase of each phase, for each of the phases, thereby switching on each phase individually in the target switch-on-phase of each phase.

### Advantageous Effects of Invention

According to the present invention, generation of energizing inrush currents associated with a closing operation of a neutral-ungrounded or neutral-noneffectively-grounded no-load three-phase transformer can be suppressed.

### Brief Description of Drawings

FIG. 1 illustrates a configuration example of a phase control switchgear according to an embodiment.
FIG. 2 illustrates a configuration example of the phase control switchgear according to the embodiment.
FIG. 3 illustrates a configuration example of the phase control switchgear according to the embodiment.
FIG. 4 illustrates a configuration example of the phase control switchgear according to the embodiment.
FIG. 5 illustrates waveform diagrams of individual units for explaining an operation of the phase control switchgear according to the embodiment.
FIG. 6 illustrates explanatory diagrams of a determination method of a target switch-on-phase of a first switch-on-phase.
FIG. 7 illustrates explanatory diagrams of a magnetic flux error when two phases are simultaneously switched on.

### Description of Embodiments

Exemplary embodiments of a phase control switchgear according to the present invention will be explained below in detail with reference to the accompanying drawings. The present invention is not limited to the embodiments.

### Embodiment.

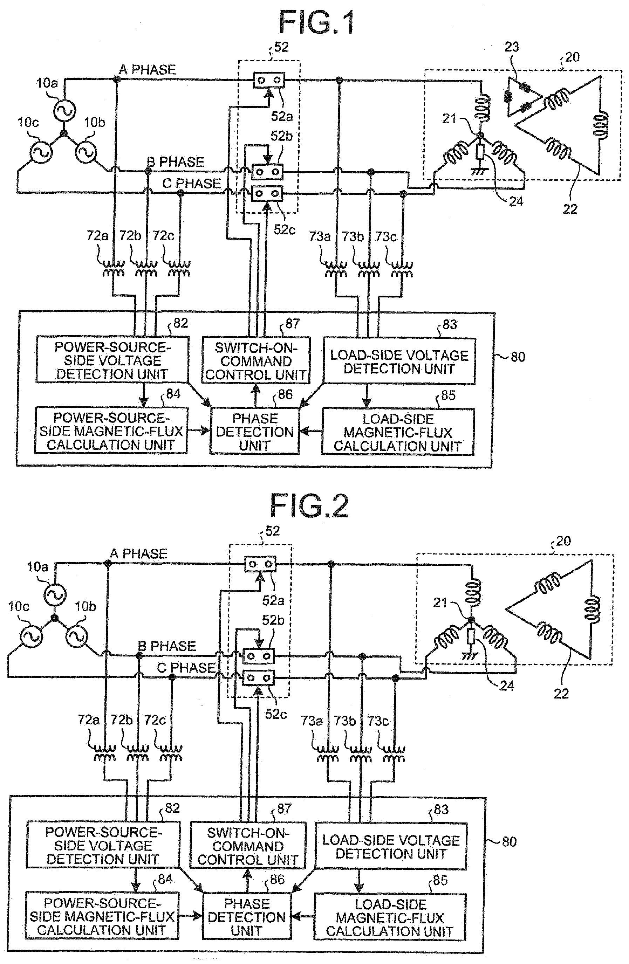

FIGS. 1 to 4 are configuration examples of a phase control switchgear according to an embodiment of the present invention. In the phase control switchgear according to the present embodiment, as shown in FIGS. 1 to 4, a neutral-ungrounded or neutral-noneffectively-grounded no-load three-phase transformer 20 is connected as a load-side circuit. In FIGS. 1 to 4, a breaker 52 as a three-phase switchgear is connected between a three-phase power source including an A-phase power source 10a, a B-phase power source 10b, and a C-phase power source 10c shown on the left side in FIGS. 1 to 4 and the three-phase transformer 20 shown on the right side in FIGS. 1 to 4. The breaker 52 includes arc-extinguishing chambers 52a, 52b, and 52c, and each contact in the arc-extinguishing chambers 52a, 52b, and 52c can independently perform an opening/closing operation. On a power source side of the breaker 52, power-source-side voltage measurement units 72a, 72b, and 72c that measure a power-source-side voltage in each phase are provided. On the three-phase transformer 20 side of the breaker 52, load-side voltage measurement units 73a, 73b, and 73c that measure a load-side voltage in each phase are provided.

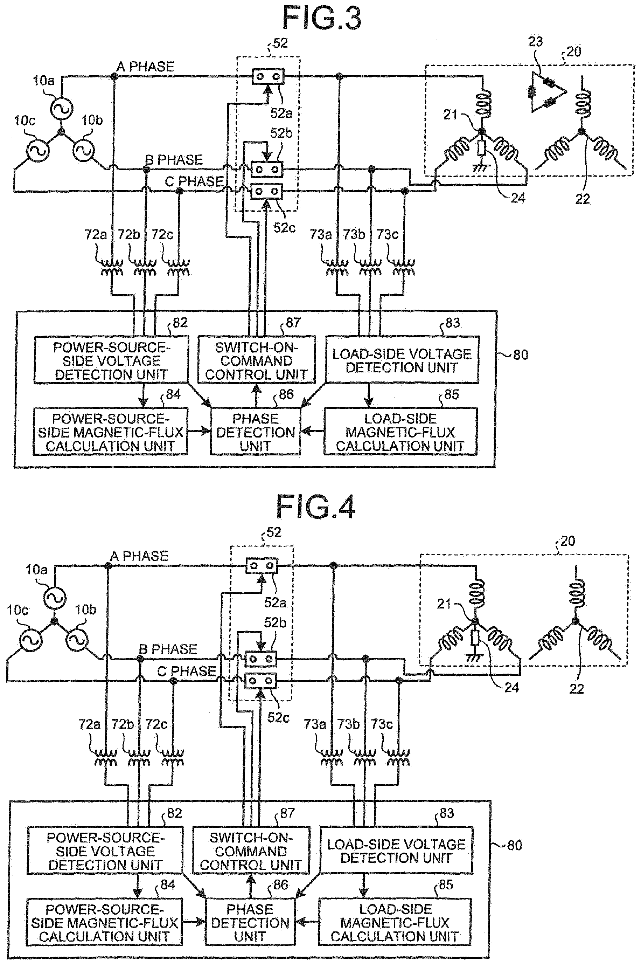

As for a configuration of the three-phase transformer 20, the present embodiment is directed to, for example, configuration examples shown in FIGS. 1 to 4. In the example shown in FIG. 1, the three-phase transformer 20 includes a Y-connection primary winding 21, a Δ-connection secondary winding 22, and a Δ-connection tertiary winding 23. In the example shown in FIG. 2, the three-phase transformer 20 includes the Y-connection primary winding 21 and the Δ-connection secondary winding 22. In the example shown in FIG. 3, the three-phase transformer 20 includes the Y-connection primary winding 21, the Y-connection secondary winding 22, and the Δ-connection tertiary winding 23. In the example shown in FIG. 4, the three-phase transformer 20 includes the Y-connection primary winding 21 and the Y-connection secondary winding 22. In the configurations shown in FIGS. 1 to 3, the three-phase transformer 20 can be any one of a shell type (a shell-type iron core) and a core type (a core-type iron core). Meanwhile, like the configuration shown in FIG. 4, when the secondary and tertiary windings do not include any Δ-connection, the three-phase transformer 20 needs to be the core type. In the examples shown in FIGS. 1 to 4, the three-phase transformer 20 is described as a neutral-noneffectively-grounded transformer with the neutral point of the primary winding 21 being grounded by a high resistance resistor 24. However, the three-phase transformer 20 can be a neutral-ungrounded transformer with the neutral point of the primary winding 21 being ungrounded.

A phase control switchgear 80 according to the present embodiment is constituted by a computer, for example, and includes a power-source-side voltage detection unit 82, a load-side voltage detection unit 83, a power-source-side magnetic-flux calculation unit 84 that calculates a power-source-side magnetic flux in each phase, a load-side magnetic-flux calculation unit 85 that a calculates load-side magnetic flux in each phase, a phase detection unit 86, and a switch-on-command control unit 87 that independently outputs a switch-oncommand to each contact in each of the arc-extinguishing chambers 52a, 52b, and 52c in each phase.

The power-source-side voltage detection unit 82 detects a power-source-side phase-to-ground voltage in each phase based on signals from the respective power-source-side voltage measurement units 72a, 72b, and 72c, and outputs the voltage to the power-source-side magnetic-flux calculation unit 84 and the phase detection unit 86.

The load-side voltage detection unit 83 detects a load-side phase-to-ground voltage in each phase based on signals from the respective load-side voltage measurement units 73a, 73b, and 73c, and outputs the voltage to the load-side magnetic-flux calculation unit 85 and the phase detection unit 86.

The power-source-side magnetic-flux calculation unit 84 integrates the power-source-side phase-to-ground voltage in each phase to calculate a power-source-side magnetic flux in each phase, and outputs the magnetic flux to the phase detection unit 86.

The load-side magnetic-flux calculation unit 85 integrates the load-side phase-to-ground voltage in each phase to calculate a load-side magnetic flux in each phase, and outputs the magnetic flux to the phase detection unit 86.

The phase detection unit 86 detects a target switch-on-phase of each phase based on the power-source-side voltage in each phase, the power-source-side magnetic flux in each phase, the load-side voltage in each phase, and the load-side magnetic flux in each phase, and outputs the target switch-on-phase to the switch-on-command control unit 87.

The switch-on-command control unit 87 controls each contact in the respective arc-extinguishing chambers 52a, 52b, and 52c so that each phase is electrically switched on in the target switch-on-phase of each phase.

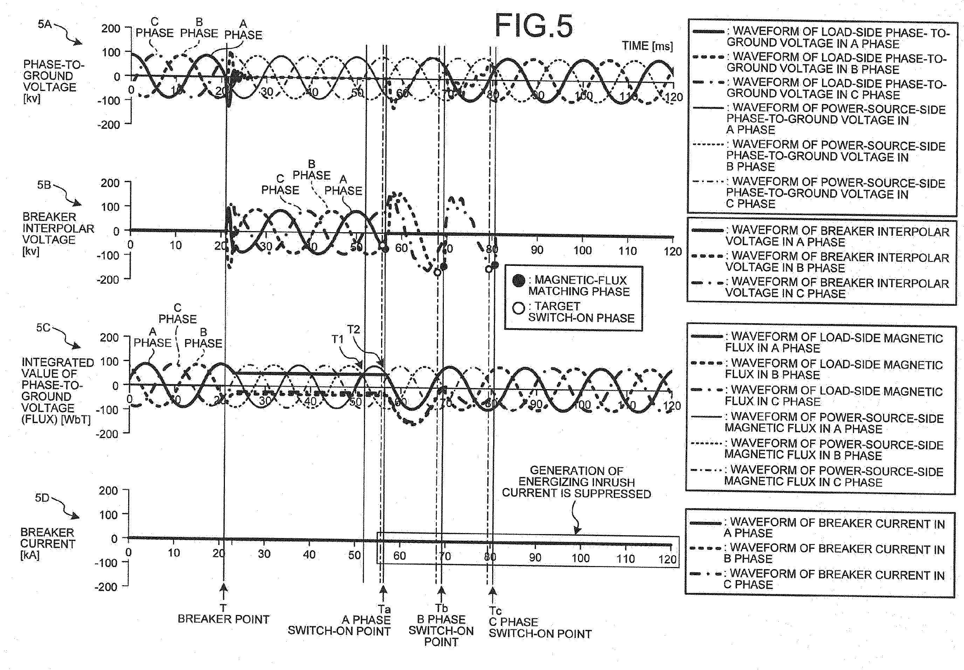

An operation of the phase control switchgear according to the present embodiment is explained next. FIG. 5 illustrates waveform diagrams of individual units for explaining an operation of the phase control switchgear according to the present embodiment.

In FIG. 5, a time is plotted on a horizontal axis. In respective diagrams in FIG. 5, the waveforms of the respective units are shown when the contact in each phase of the breaker 52 is interrupted at a time T, an A phase contact in the arc-extinguishing chamber 52a is switched on at a time Ta, a B phase contact in the arc-extinguishing chamber 52b is switched on at a time Tb, and a C phase contact in the arc-extinguishing chamber 52c is switched on at a time Tc.

5A of FIG. 5 depicts waveforms of power-source-side and load-side phase-to-ground voltages in each phase. In 5A of FIG. 5, a line shown by a solid line indicates a waveform of an A phase-to-ground voltage, a line shown by a broken line indicates a waveform of a B phase-to-ground voltage, and a line shown by a one-dot chain line indicates a waveform of a C phase-to-ground voltage. In the waveform of each phase-to-ground voltage from an interrupting time T until the switch-ontimes Ta, Tb, and Tc of the contact in each phase, each fine line indicates a waveform of the power-source-side phase-to-ground voltage in each phase and each thick line indicates a waveform of the load-side phase-to-ground voltage in each phase.

5B of FIG. 5 represents a breaker interpolar voltage in each phase. In 5B of FIG. 5, a line shown by a solid line indicates a waveform of a breaker interpolar voltage in the A phase, a line shown by a broken line indicates a waveform of a breaker interpolar voltage in the B phase, and a line shown by a one-dot chain line indicates a waveform of a breaker interpolar voltage in the C phase. An example shown in 5B of FIG. 5 indicates a waveform of a breaker interpolar voltage obtained by subtracting the load-side phase-to-ground voltage in each phase from the power-source-side phase-to-ground voltage in each phase.

5C of FIG. 5 indicates a waveform of the power-source-side and load-side magnetic flux in each phase. In 5C of FIG. 5, a line shown by a solid line indicates a waveform of an A phase magnetic flux, a line shown by a broken line indicates a waveform of a B phase magnetic flux, and a line shown by a one-dot chain line indicates a waveform of a C phase magnetic flux. In the waveform of the magnetic flux in each phase from the interrupting time T until the switch-ontimes Ta, Tb, and Tc of the contact in each phase, each fine line indicates a waveform of the power-source-side magnetic flux in each phase, and each thick line indicates a waveform of the load-side magnetic flux in each phase.

5D of FIG. 5 represents a breaker current in each phase flowing through each contact in the respective arc-extinguishing chambers 52a, 52b, and 52c of the breaker 52.

A breaker switch-on operation of a first switch-on-phase is explained first. At the time T, when each contact in the respective arc-extinguishing chambers 52a, 52b, and 52c of the breaker 52 is interrupted, a certain residual magnetic flux is generated in the waveform of the load-side magnetic flux in each phase as shown in 5C of FIG. 5.

The phase detection unit 86 detects a phase having the largest absolute value of the load-side magnetic flux in each phase input from the load-side magnetic-flux calculation unit 85, designates the phase as a first switch-on-phase (the A phase in the example shown in FIG. 5), and detects a phase in which the polarity and size of the load-side magnetic flux (the residual magnetic flux) match with those of the power-source-side magnetic flux (the steady magnetic flux) (hereinafter, "magnetic-flux matching phase") in the first switch-on-phase. As shown in 5C of FIG. 5, the magnetic-flux matching phase of the first switch-on-phase is present two each in one cycle, that is, a magnetic-flux matching phase T1 in a rise region of the power-source-side magnetic flux and a magnetic-flux matching phase T2 in a fall region of the power-source-side magnetic flux.

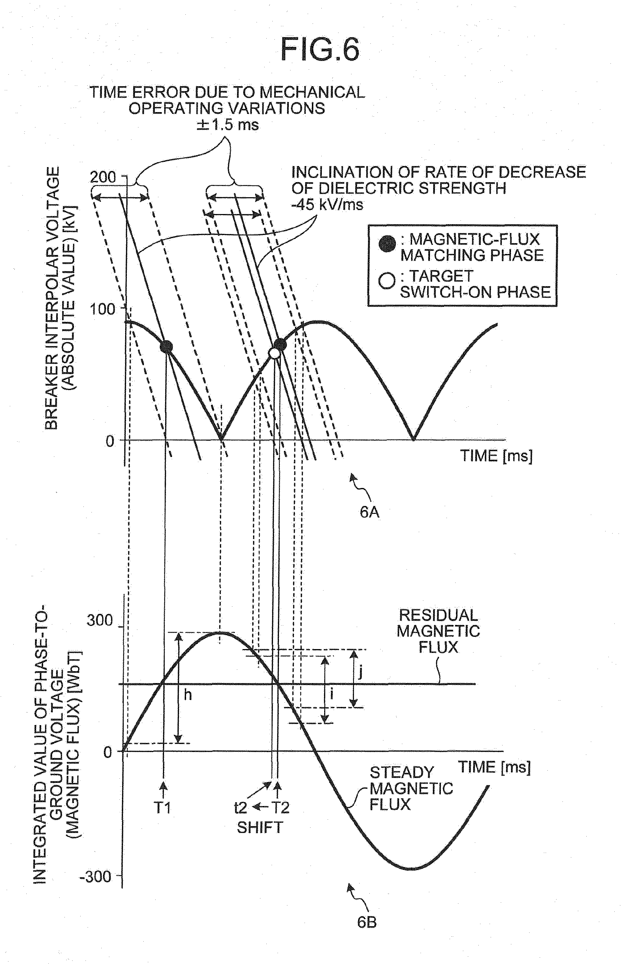

FIG. 6 illustrates explanatory diagrams of a determination method of the target switch-on-phase of the first switch-on-phase. 6A of FIG. 6 represents an absolute value waveform of the breaker interpolar voltage before switch-on of the first switch-on-phase (here, the A phase). 6B of FIG. 6 represents a waveform of the load-side magnetic flux (a waveform of the residual magnetic flux) and a waveform of the power-source-side magnetic flux (a waveform of the normal magnetic flux) in the A phase corresponding to the same section as that in 6A of FIG. 6.

The rate of decrease of dielectric strength between electrodes of the breaker in a closing process of the breaker 52 (hereinafter, "rate of decrease of interpolar dielectric strength") has a fall characteristic as shown in FIG. 6 (for example, about -45 kV/ms), and has a time error (for example, of about ±1.5 milliseconds) due to mechanical operating variations of the breaker 52. Therefore, in an example shown in FIG. 6, when the magnetic-flux matching phase T1 present in the fall region of the absolute value of the breaker interpolar voltage is assumed to be the target switch-on-phase, a magnetic flux error between the load-side magnetic flux and the power-source-side magnetic flux (hereinafter, simply "magnetic flux error") is in a range h shown in 6B of FIG. 6.

On the other hand, when the magnetic-flux matching phase T2 present in the rise region of the absolute value of the breaker interpolar voltage is assumed to be the target switch-on-phase, the range of the magnetic flux error becomes a range i shown in 6B of FIG. 6, which is smaller than the case where the magnetic-flux matching phase T1 is assumed to be the target switch-on-phase.

Accordingly, if the phase detection unit 86 selects a matching phase having a smaller range of the magnetic flux error (here, T2) among the two magnetic-flux matching phases T1 and T2, and designate the matching phase as the target switch-on-phase, an influence of the mechanical operating variations of the breaker 52 can be reduced.

Furthermore, if the target switch-on-phase is shifted so that the range of the magnetic flux error obtained according to the selected magnetic-flux matching phase (here, T2) minimized, the influence of the mechanical operating variations of the breaker 52 can be minimized. That is, in the example shown in FIG. 6, when t2 is designated as the target switch-on-phase, the range of the magnetic flux error can be set to a minimum range j.

Alternatively, identical effects can be obtained by obtaining a phase respectively shifted from the respective magnetic-flux matching phases T1 and T2 so that the range of the magnetic flux error is minimized for each of the magnetic-flux matching phase T1 and T2, to designate the matching phase having a smaller range of the magnetic flux error of the obtained phases (here, the phase t2) as the target switch-on-phase of the first switch-on-phase.

The switch-on-command control unit 87 controls the breaker 52 so that the first switch-on-phase is electrically switched on in the target switch-on-phase of the first switch-on-phase (here, the A phase).

A breaker switch-on operation of a second switch-on-phase is explained next. When the first switch-on-phase is switched on, as shown in 5C of FIG. 5, the waveform of the load-side magnetic flux in the remaining B phase and C phase respectively becomes a waveform in which the normal magnetic flux of the first switch-on-phase (here, the A phase) is superimposed on the residual magnetic flux before the first switch-on-phase is switched on.

After the first switch-on-phase (here, the A phase) is switched on at the time Ta, the phase detection unit 86 determines either phase of the remaining B phase and C phase (the B phase in the example shown in FIG. 5) as the second switch-on-phase, and detects the magnetic-flux matching phase in which the polarity and size of the load-side magnetic flux match with those of the power-source-side magnetic flux in the second switch-on-phase. The magnetic-flux matching phase of the second switch-on-phase is present two each in one cycle as in the case of the first switch-on-phase.

Also in the two magnetic-flux matching phases of the second switch-on-phase, as in the case of the first switch-on-phase, the range of the magnetic flux error in either one of the magnetic-flux matching phases becomes smaller than that in the other magnetic-flux matching phase. Accordingly, as in the case of the first switch-on-phase, if the phase detection unit 86 selects one matching phase having a smaller range of the magnetic flux error among the two magnetic-flux matching phases, and designates the phase as the target switch-on-phase, the influence of the mechanical operating variations of the breaker 52 can be reduced.

Furthermore, as in the case of the first switch-on-phase, by shifting the target switch-on-phase so that the range of the magnetic flux error obtained according to the selected magnetic-flux matching phase is minimized, the influence of the mechanical operating variations of the breaker 52 can be minimized.

Alternatively, as in the case of the first switch-on-phase, a phase respectively shifted from the respective magnetic-flux matching phases so that the range of the magnetic flux error is minimized is obtained for each of the magnetic-flux matching phases, and the matching phase having a smaller range of the magnetic flux error of the obtained phases can be designated as the target switch-on-phase of the second switch-on-phase.

The switch-on-command control unit 87 then controls the breaker 52 so that the second switch-on-phase is electrically switched on in the target switch-on-phase of the second switch-on-phase (here, the B phase).

Subsequently, a breaker switch-on operation of a third switch-on-phase is explained. When the first and second switch-on-phases are switched on, as shown in 5C of FIG. 5, the waveform of the load-side magnetic flux in the remaining C phase becomes a waveform in which the normal magnetic flux of the second switch-on-phase (here, the B phase) is superimposed on the waveform of the load-side magnetic flux before the second switch-on-phase is switched on.

After the second switch-on-phase (here, the B phase) is switched on at the time Tb, the phase detection unit 86 designates the remaining C phase as the third switch-on-phase, and detects the magnetic-flux matching phase in which the polarity and size of the load-side magnetic flux match with those of the power-source-side magnetic flux in the third switch-on-phase. The magnetic-flux matching phase of the third switch-on-phase is present two each in one cycle as in the cases of the first and second switch-on-phases.

Also in the two magnetic-flux matching phases of the third switch-on-phase, as in the cases of the first and second switch-on-phases, the range of the magnetic flux error in either one of the magnetic-flux matching phases becomes smaller than that in the other magnetic-flux matching phase. Accordingly, as in the cases of the first and second switch-on-phases, if the phase detection unit 86 selects one matching phase having a smaller range of the magnetic flux error among the two magnetic-flux matching phases, and designates the phase as the target switch-on-phase, the influence of the mechanical operating variations of the breaker 52 can be reduced.

As in the cases of the first and second switch-on-phases, by shifting the target switch-on-phase so that the range of the magnetic flux error obtained according to the selected magnetic-flux matching phase is minimized, the influence of the mechanical operating variations of the breaker 52 can be minimized.

Alternatively, as in the cases of the first and second switch-on-phases, a phase respectively shifted from the respective magnetic-flux matching phases so that the range of the magnetic flux error is minimized is obtained for each of the magnetic-flux matching phases, and the matching phase having a smaller range of the magnetic flux error of the obtained phases can be designated as the target switch-on-phase of the third switch-on-phase.

The switch-on-command control unit 87 then controls the breaker 52 so that the third switch-on-phase is electrically switched on in the target switch-on-phase of the third switch-on-phase (here, the C phase).

In this manner, the magnetic-flux matching phase is obtained individually for each phase, and a phase in which the range of the magnetic flux error obtained according to the respective magnetic-flux matching phases is minimized is designated as the target switch-on-phase, to control each contact in the respective arc-extinguishing chambers 52a, 52b, and 52c so as to be electrically switched on in the target switch-on-phase of each phase. Consequently, the influence of the mechanical operating variations of the breaker 52 can be minimized, and as shown in 5D of FIG. 5, generation of the energizing inrush currents associated with the closing operation of the three-phase transformer 20 can be suppressed.

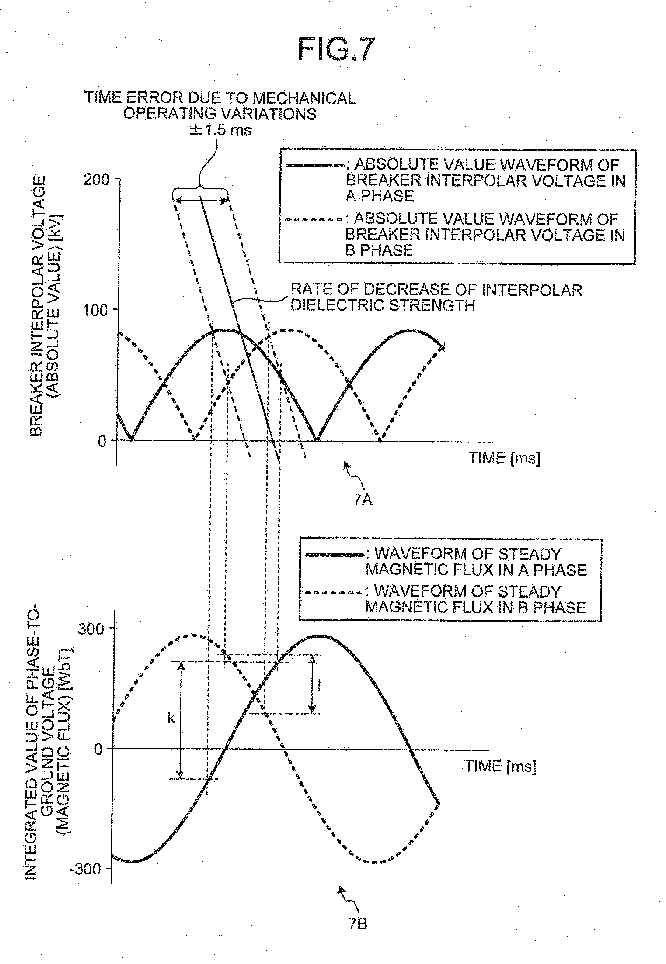

As a comparison with the present embodiment, in an example in which two phases are simultaneously switched on, an influence of a time error of the rate of decrease of interpolar dielectric strength due to the mechanical operating variations of the breaker 52 on the magnetic flux error is explained here. FIG. 7 is an explanatory diagram of a magnetic flux error when two phases are simultaneously switched on. 7A of FIG. 7 depicts an absolute value waveform of the breaker interpolar voltage in the A phase and the B phase, and 7B of FIG. 7 depicts a waveform of the residual magnetic flux (a load-side magnetic flux waveform) and a waveform of the normal magnetic flux (a power-source-side magnetic flux waveform) in the A phase and the B phase.

As shown in FIG. 7, when two phases are simultaneously switched on, the influence of the mechanical operating variations of the breaker 52 is small in one phase (here, the B phase), and thus switch-on can be performed in a phase in which the range of the magnetic flux error (a range k in 7B of FIG. 7) becomes small. However, in the other phase (here, the A phase), the influence of the mechanical operating variations of the breaker 52 increases, and thus there is no other alternative but to perform switch-on in a phase in which the range of the magnetic flux error (a range 1 in 7B of FIG. 7) becomes large. That is, in the example shown in FIG. 7 in which two phases are simultaneously switched on, because the range of the magnetic flux error in a switch-on-phase of either one of the two phases increases, generation of energizing inrush currents may not be suppressed.

As explained above, according to the phase control switchgear of the present embodiment, a phase having the largest absolute value of the load-side magnetic flux is detected and designated as the first switch-on-phase. Among two magnetic-flux matching phases in which the polarity and size of the load-side magnetic flux match with those of the power-source-side magnetic flux of the first switch-on-phase in one cycle, a matching phase having a smaller range of the magnetic flux error between the load-side magnetic flux and the power-source-side magnetic flux due to the mechanical operating variations of the breaker is designated as the target switch-on-phase of the first switch-on-phase and the first switch-on-phase is switched on. After the first switch-on-phase is switched on, an arbitrary phase of the remaining two phases is designated as the second switch-on-phase, and among two magnetic-flux matching phases in which the polarity and size of the load-side magnetic flux match with those of the power-source-side magnetic flux of the second switch-on-phase in one cycle, a matching phase having a smaller range of the magnetic flux error is designated as the target switch-on-phase of the second switch-on-phase and the second switch-on-phase is switched on. After the second switch-on-phase is switched on, the remaining phase is designated as the third switch-on-phase, and among two magnetic-flux matching phases in which the polarity and size of the load-side magnetic flux match with those of the power-source-side magnetic flux of the third switch-on-phase in one cycle, a matching phase having a smaller range of the magnetic flux error is designated as the target switch-on-phase of the third switch-on-phase and the third switch-on-phase is switched on. Consequently, each phase can be switched on individually in an optimum target switch-on-phase, and generation of energizing inrush currents associated with the closing operation of the neutral-ungrounded or neutral-noneffectively-grounded no-load three-phase transformer can be suppressed.

Furthermore, by shifting the target switch-on-phase so that the range of the magnetic flux error obtained according to the magnetic-flux matching phase is minimized for each phase, generation of energizing inrush currents can be further suppressed more effectively.

The configuration described in the above embodiment is only an example of the configuration of the present invention. The configuration can be combined with other well-known techniques, and it is needless to mention that the present invention can be configured while modifying it without departing from the scope of the invention, which is defined solely by the appended claims.

### Industrial Applicability

As described above, the phase control switchgear according to the present invention can be useful as an invention that can suppress generation of energizing inrush currents associated with a closing operation of a neutral-ungrounded or neutral-noneffectively-grounded no-load three-phase transformer.

### Reference Signs List

10a, 10b, 10c three-phase power source
20 three-phase transformer
21 primary winding
22 secondary winding
23 tertiary winding
24 high resistance resistor
52 breaker (three-phase switchgear)
52a, 52b, 52c arc-extinguishing chamber
72a, 72b, 72c power-source-side voltage measurement unit
73a, 73b, 73c load-side voltage measurement unit
80 phase control switchgear
82 power-source-side voltage detection unit
83 load-side voltage detection unit
84 power-source-side magnetic-flux calculation unit
85 load-side magnetic-flux calculation unit
86 phase detection unit
87 switch-on-command control unit

## Claims

1. A phase control switchgear applied to a configuration in which a three-phase switchgear (52) is connected between a power source (10a, 10b, 10c) and a neutral-ungrounded or neutral-noneffectively-grounded no-load three-phase transformer (20) to control a closing phase of the phase control switchgear, the phase control switchgear comprising:
a power-source-side voltage detection unit (82) that is configured to detect a power-source-side voltage in each phase on the power source side;
a load-side voltage detection unit (83) that is configured to detect a load-side voltage in each phase on the three-phase transformer side;
a power-source-side magnetic-flux calculation unit (84) that is configured to integrate the power-source-side voltage in each phase to calculate the power-source-side magnetic flux in each phase;
a load-side magnetic-flux calculation unit (85) that is configured to integrate the load-side voltage in each phase to calculate the load-side magnetic flux in each phase;
a phase detection unit (86) that is configured to determine a switch-on order based on an absolute value of the load-side magnetic flux in each phase after opening of the three-phase switchgear; and
a switch-on-command control unit (87) that is configured to control the three-phase switchgear so that each phase is individually switched on in the target switch-on-phase of each phase, wherein
the phase detection unit (86) is configured to detect, after opening of the three-phase switchgear, a phase having a largest absolute value of a load-side magnetic flux in each phase and to designate the detected phase as a first switch-on-phase, configured to designate arbitrary phases other than the first switch-on-phase are respectively designated as a second switch-on-phase and a third switch-on-phase, and configured to designate a phase in which a magnetic flux error between the load-side magnetic flux and a power-source-side magnetic flux due to mechanical operating variations of the three-phase switchgear is smaller, among two magnetic-flux matching phases in which a polarity and a size of the load-side magnetic flux in each phase match with those of the power-source-side magnetic flux in each phase on the power source side in one cycle, as a target switch-on-phase of each phase, for each of the phases, and wherein
the switch-on-command control unit (87) is configured to switch on each phase individually in the target switch-on-phase of each phase.

2. The phase control switchgear according to claim 1, wherein
the three-phase transformer is a transformer having a Y-connection primary winding (21) and at least one Δ-connection secondary winding (22) or a tertiary winding (23).

3. The phase control switchgear according to claim 1, wherein
the three-phase transformer is a core-type transformer having a Y-connection primary winding (21) and a Y-connection secondary winding (22).

4. The phase control switchgear according to claim 2 or 3, wherein
the phase detection unit is configured to shift the target switch-on-phase of each phase so that the magnetic flux error obtained according to the magnetic-flux matching phase is minimized for each of the phases.

5. A closing phase control method applied to a configuration in which a three-phase switchgear (52) is connected between a power source (10a, 10b, 10c) and a neutral-ungrounded or neutral-noneffectively-grounded no-load three-phase transformer (20), wherein
the method comprises:
a step of detecting a power-source-side voltage in each phase on the power source side;
a step of detecting a load-side voltage in each phase on the three-phase transformer side;
a step of integrating the power-source-side voltage in each phase to calculate a power-source-side magnetic flux in each phase;
a step of integrating the load-side voltage in each phase to calculate a load-side magnetic flux in each phase;
a step of detecting a phase having a largest absolute value of the load-side magnetic flux and designating the phase as a first switch-on-phase;
a step of designating a phase in which a magnetic flux error between the load-side magnetic flux and the power-source-side magnetic flux due to mechanical operating variations of the three-phase switchgear is smaller, among two magnetic-flux matching phases in which a polarity and a size of the load-side magnetic flux in the first switch-on-phase match with those of the power-source-side magnetic flux in the first switch-on-phase in one cycle of the first switch-on-phase, as a target switch-on-phase of the first switch-on-phase, to switch on the first switch-on-phase;
a step of designating an arbitrary phase of remaining phases as a second switch-on-phase after the first switch-on-phase is switched on;
a step of designating a phase having the smaller magnetic flux error, among two magnetic-flux matching phases in which a polarity and a size of the load-side magnetic flux in the second switch-on-phase match with those of the power-source-side magnetic flux in the second switch-on-phase in one cycle of the second switch-on-phase, as a target switch-on-phase of the second switch-on-phase, to switch on the second switch-on-phase;
a step of designating a remaining phase as a third switch-on-phase after the second switch-on-phase is switched on; and
a step of designating a phase having the smaller magnetic flux error, among two magnetic-flux matching phases in which a polarity and a size of the load-side magnetic flux in the third switch-on-phase match with those of the power-source-side magnetic flux in the third switch-on-phase in one cycle of the third switch-on-phase, as a target switch-on-phase of the third switch-on-phase, to switch on the third switch-on-phase.

## Patentansprüche

1. Phasensteuerungsschaltvorrichtung, die auf eine Anordnung angewendet wird, in der eine dreiphasige Schaltvorrichtung (52) zwischen einer Energiequelle (10a, 10b, 10c) und einem neutral ungeerdeten oder neutral unwirksam geerdeten, lastfreien dreiphasigen Transformator (20) zum Steuern einer Schließphase der Phasensteuerungsschaltvorrichtung angeschlossen ist, wobei die Phasensteuerungsschaltvorrichtung umfasst:
eine energiequellenseitige Spannungserfassungseinheit (82), die dazu ausgelegt ist, eine energiequellenseitige Spannung in jeder Phase auf der Energiequellenseite zu erfassen;
eine lastseitige Spannungserfassungseinheit (83), die dazu ausgelegt ist, eine lastseitige Spannung in jeder Phase auf der Seite des dreiphasigen Transformators zu erfassen;
eine energiequellenseitige Magnetflussberechnungseinheit (84), die dazu ausgelegt ist, die energiequellenseitige Spannung in jeder Phase zu integrieren, um den energiequellenseitigen Magnetfluss in jeder Phase zu berechnen;
eine lastseitige Magnetflussberechnungseinheit (85), die dazu ausgelegt ist, die lastseitige Spannung in jeder Phase zu integrieren, um den lastseitigen Magnetfluss in jeder Phase zu berechnen;
eine Phasenerfassungseinheit (86), die dazu ausgelegt ist, eine Einschaltreihenfolge auf Grundlage eines absoluten Werts des lastseitigen Magnetflusses in jeder Phase nach einem Öffnen der dreiphasigen Schaltvorrichtung zu ermitteln; und
eine Einschaltbefehlsteuerungseinheit (87), die dazu ausgelegt ist, die dreiphasige Schaltvorrichtung so zu steuern, dass jede Phase in der Zieleinschaltphase jeder Phase einzeln aktiviert wird, wobei
die Phasenerfassungseinheit (86) dazu ausgelegt ist, nach dem Öffnen der dreiphasigen Schaltvorrichtung eine Phase mit dem größten absoluten Wert eines lastseitigen Magnetflusses in jeder Phase zu erfassen und die erfasste Phase als eine erste Einschaltphase zu bestimmen, dazu ausgelegt ist, beliebige Phasen außer der ersten Einschaltphase als eine zweite Einschaltphase bzw. eine dritte Einschaltphase zu bestimmen, und dazu ausgelegt ist, eine Phase, in der ein Magnetflussfehler zwischen dem lastseitigen Magnetfluss und dem energiequellenseitigen Magnetfluss aufgrund mechanischer Betriebsveränderungen der dreiphasigen Schaltvorrichtung kleiner ist, unter zwei Magnetflussanpassungsphasen, in denen eine Polarität und eine Größe des lastseitigen Magnetflusses in jeder Phase mit denjenigen des energiequellenseitigem Magnetflusses in jeder Phase auf der Energiequellenseite in einem Zyklus übereinstimmen, als Zieleinschaltphase jeder Phase für jede der Phasen zu bestimmen, und wobei
die Einschaltbefehlsteuerungseinheit (87) dazu ausgelegt ist, jede Phase in der Zieleinschaltphase jeder Phase einzeln zu aktivieren.

2. Phasensteuerungsschaltvorrichtung nach Anspruch 1, wobei
es sich bei dem dreiphasigen Transformator um einen Transformator mit einer Y-Anschluss-Primärwicklung (21) und mindestens einer Δ-Anschluss-Sekundärwicklung (22) oder einer Tertiärwicklung (23) handelt.

3. Phasensteuerungsschaltvorrichtung nach Anspruch 1, wobei
es sich bei dem dreiphasigen Transformator um einen Transformator des Kerntyps mit einer Y-Anschluss-Primärwicklung (21) und einer Y-Anschluss-Sekundärwicklung (22) handelt.

4. Phasensteuerungsschaltvorrichtung nach Anspruch 2 oder 3, wobei
die Phasenerfassungseinheit dazu ausgelegt ist, die Zieleinschaltphase jeder Phase so zu verschieben, dass der Magnetflussfehler, der entsprechend der Magnetflussanpassungsphase erhalten wird, für jede der Phasen minimiert wird.

5. Schließphasensteuerungsverfahren, das auf eine Auslegung angewendet wird, in der eine dreiphasige Schaltvorrichtung (52) zwischen einer Energiequelle (10a, 10b, 10c) und einem neutral ungeerdeten oder neutral unwirksam geerdeten, lastfreien dreiphasigen Transformator (20) angeschlossen ist, wobei
das Verfahren umfasst:
einen Schritt, eine energiequellenseitige Spannung in jeder Phase auf der Energiequellenseite zu erfassen;
einen Schritt, eine lastseitige Spannung in jeder Phase auf der Seite des dreiphasigen Transformators zu erfassen;
einen Schritt, die energiequellenseitige Spannung in jeder Phase zu integrieren, um einen energiequellenseitigen Magnetfluss in jeder Phase zu berechnen;
einen Schritt, die lastseitige Spannung in jeder Phase zu integrieren, um einen lastseitigen Magnetfluss in jeder Phase zu berechnen;
einen Schritt, eine Phase mit dem größten absoluten Wert des lastseitigen Magnetflusses zu erfassen und die Phase als eine erste Einschaltphase zu bestimmen;
einen Schritt, eine Phase, in der ein Magnetflussfehler zwischen dem lastseitigen Magnetfluss und dem energiequellenseitigen Magnetfluss aufgrund mechanischer Betriebsveränderungen der dreiphasigen Schaltvorrichtung kleiner ist, unter zwei Magnetflussanpassungsphasen, in denen eine Polarität und eine Größe des lastseitigen Magnetflusses in der ersten Einschaltphase mit denjenigen des energiequellenseitigem Magnetflusses in der ersten Einschaltphase in einem Zyklus der ersten Einschaltphase übereinstimmen, als Zieleinschaltphase der ersten Einschaltphase zu bestimmen, um die erste Einschaltphase zu aktivieren;
einen Schritt, eine beliebige Phase der übrigen Phasen als zweite Einschaltphase zu bestimmen, nachdem die erste Einschaltphase aktiviert wurde;
einen Schritt, eine Phase mit dem kleineren Magnetflussfehler unter zwei Magnetflussanpassungsphasen, in denen eine Polarität und eine Größe des lastseitigen Magnetflusses in der zweiten Einschaltphase mit denjenigen des energiequellenseitigem Magnetflusses in der zweiten Einschaltphase in einem Zyklus der zweiten Einschaltphase übereinstimmen, als Zieleinschaltphase der zweiten Einschaltphase zu bestimmen, um die zweite Einschaltphase zu aktivieren;
einen Schritt, eine übrige Phase als dritte Einschaltphase zu bestimmen, nachdem die zweite Einschaltphase aktiviert wurde;
einen Schritt, eine Phase mit dem kleineren Magnetflussfehler unter zwei Magnetflussanpassungsphasen, in denen eine Polarität und eine Größe des lastseitigen Magnetflusses der dritten Einschaltphase mit denjenigen des energiequellenseitigem Magnetflusses in der dritten Einschaltphase in einem Zyklus der dritten Einschaltphase übereinstimmen, als Zieleinschaltphase der dritten Einschaltphase zu bestimmen, um die dritte Einschaltphase zu aktivieren.

## Revendications

1. Appareillage de commutation de commande de phase appliqué à une configuration dans laquelle un appareillage de commutation (52) triphasé est connecté entre une source de puissance (10a, 10b, 10c) et un transformateur (20) triphasé sans charge dont le point neutre n'est pas mis à la terre ou n'est pas mis efficacement à la terre pour commander une phase de fermeture de l'appareillage de commutation de commande de phase, l'appareillage de commutation de commande de phase comprenant :
une unité de détection de tension côté source de puissance (82) qui est configurée pour détecter une tension côté source de puissance dans chaque phase du côté source de puissance ;
une unité de détection de tension côté charge (83) qui est configurée pour détecter une tension côté charge dans chaque phase du côté transformateur triphasé ;
une unité de calcul de flux magnétique côté source de puissance (84) qui est configurée pour intégrer la tension côté source de puissance dans chaque phase pour calculer le flux magnétique côté source de puissance dans chaque phase ;
une unité de calcul de flux magnétique côté charge (85) qui est configurée pour intégrer la tension côté charge dans chaque phase pour calculer le flux magnétique côté charge dans chaque phase ;
une unité de détection de phase (86) qui est configurée pour déterminer un ordre d'excitation sur la base d'une valeur absolue du flux magnétique côté charge dans chaque phase après ouverture de l'appareillage de commutation triphasé ; et
une unité de commande de consigne d'excitation (87) qui est configurée pour commander l'appareillage de commutation triphasé de telle sorte que chaque phase soit individuellement excitée dans la phase d'excitation cible de chaque phase, sachant que
l'unité de détection de phase (86) est configurée pour détecter, après ouverture de l'appareillage de commutation triphasé, une phase ayant une valeur absolue la plus élevée d'un flux magnétique côté charge dans chaque phase et pour désigner la phase détectée comme première phase d'excitation, configurée pour désigner des phases arbitraires autres que la première phase d'excitation respectivement comme deuxième phase d'excitation et troisième phase d'excitation, et configurée pour désigner une phase dans laquelle une erreur de flux magnétique entre le flux magnétique côté charge et un flux magnétique côté source de puissance due à des variations du fonctionnement mécanique de l'appareillage de commutation triphasé est la plus petite, parmi deux phases correspondant au flux magnétique dans lesquelles une polarité et une amplitude du flux magnétique côté charge dans chaque phase correspondent à celles du flux magnétique côté source de puissance dans chaque phase du côté source de puissance dans un cycle, comme phase d'excitation cible de chaque phase, pour chacune des phases, et sachant que
l'unité de commande de consigne d'excitation (87) est configurée pour exciter chaque phase individuellement dans la phase d'excitation cible de chaque phase.

2. L'appareillage de commutation de commande de phase selon la revendication 1, sachant que
le transformateur triphasé est un transformateur ayant un enroulement primaire (21) à connexion Y et au moins un enroulement secondaire (22) à connexion Δ ou un enroulement tertiaire (23).

3. L'appareillage de commutation de commande de phase selon la revendication 1, sachant que
le transformateur triphasé est un transformateur à noyau ayant un enroulement primaire (21) à connexion Y et un enroulement secondaire (22) à connexion Y.

4. L'appareillage de commutation de commande de phase selon la revendication 2 ou 3, sachant que
l'unité de détection de phase est configurée pour décaler la phase d'excitation cible de chaque phase de telle sorte que l'erreur de flux magnétique obtenue selon la phase correspondant au flux magnétique soit minimisée pour chacune des phases.

5. Procédé de commande de phase de fermeture appliqué à une configuration dans laquelle un appareillage de commutation (52) triphasé est connecté entre une source de puissance (10a, 10b, 10c) et un transformateur (20) triphasé sans charge dont le point neutre n'est pas mis à la terre ou n'est pas mis efficacement à la terre, sachant que
le procédé comprend :
une étape de détection d'une tension côté source de puissance dans chaque phase du côté source de puissance ;
une étape de détection d'une tension côté charge dans chaque phase du côté transformateur triphasé ;
une étape d'intégration de la tension côté source de puissance dans chaque phase pour calculer un flux magnétique côté source de puissance dans chaque phase ;
une étape d'intégration de la tension côté charge dans chaque phase pour calculer un flux magnétique côté charge dans chaque phase ;
une étape de détection d'une phase ayant une valeur absolue la plus élevée du flux magnétique côté charge et désignant la phase comme première phase d'excitation ;
une étape de désignation d'une phase dans laquelle une erreur de flux magnétique entre le flux magnétique côté charge et le flux magnétique côté source de puissance due à des variations du fonctionnement mécanique de l'appareillage de commutation triphasé est la plus petite, parmi deux phases correspondant au flux magnétique dans lesquelles une polarité et une amplitude du flux magnétique côté charge dans la première phase d'excitation correspondent à celles du flux magnétique côté source de puissance dans la première phase d'excitation dans un cycle de la première phase d'excitation, comme phase d'excitation cible de la première phase d'excitation, pour exciter la première phase d'excitation ;
une étape de désignation d'une phase arbitraire de phases restantes comme deuxième phase d'excitation après que la première phase d'excitation est excitée ;
une étape de désignation d'une phase ayant l'erreur de flux magnétique la plus petite, parmi deux phases correspondant au flux magnétique dans lesquelles une polarité et une amplitude du flux magnétique côté charge dans la deuxième phase d'excitation correspondent à celles du flux magnétique côté source de puissance dans la deuxième phase d'excitation dans un cycle de la deuxième phase d'excitation, comme phase d'excitation cible de la deuxième phase d'excitation, pour exciter la deuxième phase d'excitation ;
une étape de désignation d'une phase restante comme troisième phase d'excitation après que la deuxième phase d'excitation est excitée ; et
une étape de désignation d'une phase ayant l'erreur de flux magnétique la plus petite, parmi deux phases correspondant au flux magnétique dans lesquelles une polarité et une amplitude du flux magnétique côté charge dans la troisième phase d'excitation correspondent à celles du flux magnétique côté source de puissance dans la troisième phase d'excitation dans un cycle de la troisième phase d'excitation, comme phase d'excitation cible de la troisième phase d'excitation, pour exciter la troisième phase d'excitation.
